(19) Europäisches Patentamt
European Patent Office
Office européen des brevets

(11) Publication number: **0 562 578 B1**

(12) **EUROPEAN PATENT SPECIFICATION**

(45) Date of publication of patent specification: **15.03.95**

(51) Int. Cl.[6]: **B41M 5/00**, C08G 63/199

(21) Application number: **93104873.0**

(22) Date of filing: **24.03.93**

The file contains technical information submitted after the application was filed and not included in this specification

(54) **Polyester resin for a dye receptive-layer used in thermal transfer recording.**

(30) Priority: **24.03.92 JP 66406/92**
**25.08.92 JP 226258/92**
**17.11.92 JP 307364/92**

(43) Date of publication of application:
**29.09.93 Bulletin 93/39**

(45) Publication of the grant of the patent:
**15.03.95 Bulletin 95/11**

(84) Designated Contracting States:
**DE FR GB**

(56) References cited:
**EP-A- 0 364 900**
**EP-A- 0 464 921**
**EP-A- 0 475 633**

(73) Proprietor: **MITSUBISHI RAYON CO., LTD**
**3-19, Kyobashi 2-chome**
**Chuo-ku**
**Tokyo (JP)**

(72) Inventor: **Kushi, Kenji, c/o Central Research Lab.**
**Mitsubishi Rayon Co.,Ltd.,**
**20-1, Miyuki-cho**
**Otake-shi,**
**Hiroshima-ken (JP)**
Inventor: **Iseki, Takayuki, c/o Central Research Lab.**
**Mitsubishi Rayon Co.,Ltd.,**
**20-1, Miyuki-cho**
**Otake-shi,**
**Hiroshima-ken (JP)**
Inventor: **Fujiwara, Tadayuki, c/o Central Research Lab.**
**Mitsubishi Rayon Co.,Ltd.,**
**20-1, Miyuki-cho**
**Otake-shi,**
**Hiroshima-ken (JP)**
Inventor: **Jufuku, Kazuhiko, c/o Central Research Lab.**
**Mitsubishi Rayon Co.,Ltd.,**
**20-1, Miyuki-cho**
**Otake-shi,**
**Hiroshima-ken (JP)**
Inventor: **Ueda, Akifumi, c/o Central Research Lab.**
**Mitsubishi Rayon Co.,Ltd.,**
**20-1, Miyuki-cho**
**Otake-shi,**
**Hiroshima-ken (JP)**

**EP 0 562 578 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Iwasaki, Hitoshi, c/o Toyohashi Plants**
**Mitsubishi Rayon Co.,Ltd.,**
**1-2, Ushikawadori 4-ch.**
**Toyohashi-Shi,**
**Aichi-ken (JP)**
Inventor: **Nagai, Youichi, c/o Toyohashi Plants**
**Mitsubishi Rayon Co.,Ltd.,**
**1-2, Ushikawadori 4-ch.**
**Toyohashi-Shi,**
**Aichi-ken (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

## Description

### BACKGROUND OF THE INVENTION

#### Field of the Invention

The present invention relates to a recording medium for sublimation type heat-sensitive transfer recording process.

#### Background Art

Sublimation type heat-sensitive transfer recording processes are advantageous in that the level of noise produced during recording is low, the apparatus used therefor is small and inexpensive, the maintenance thereof is easy, and the output time is short. Furthermore, since sublimation type dyes are used, by continuously varying the amounts of the exothermic energy , high contrast recording may be easily achieved, and such recording exhibits high density and high resolution. As a result, in comparison with other recording methods, such a method is advantageous, especially for producing full color hard copy, and has been adopted as a recording method for color printers, video printers, and the like.

However, as the image recorded by using such a conventional recording medium for a sublimation type heat-sensitive transfer recording process has a wrong storage stability, this is disadvantageous in that fade out and discoloration resulting from sunlight or fluorescent light exposure occurs easily, and that blurring occurs additionally to the fade out and discoloration resulting from long storage under a condition of high temperature and high humidity.

EP-A-0 475 633 reveals a thermal transfer printing receiver sheet comprising a substrate supporting a dye-receiving layer on its surface, wherein the main constituent of the dye-receiving layer is a copolyester in which the acid component comprises at least one alicyclic dicarboxylic acid, and the alcohol component comprises at least one alicyclic diol. The coating composition applying the dye-receiving layer may contain a cross-linking agent which includes compounds having isocyanate groups, active methylol or alkoxymethyl groups, acid anhydride, carboxy groups or epoxy groups.

### SUMMARY OF THE INVENTION

It is an object of the present invention to obtain a recording medium for sublimation type heat-sensitive transfer recording process, which can provide an image recorded thereon having good storage stability, that is to say, superior resistance to light exposure and dark fade out.

The recording medium for sublimation type heat-sensitive transfer recording process according to the present invention has a dye receptive layer including a polyester resin which is formed by using a dicarboxylic component consisting of a mixture of terephthalic acid and isophthalic acid and a diol component containing a diol compound shown in Formula (1) below in a range of 5-80 molar % with respect to the total diol component, and a cross-linking agent having an acryloyloxy group or a methacryloyloxy group which can be cured by an activating energy ray.

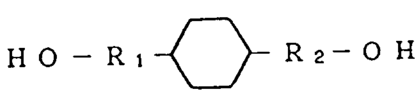

(1)

(In Formula (1), each of $R_1$ and $R_2$ represents an alkylene group having a number of carbon atoms within a range of 1-12.)

Thus obtained recording medium for a sublimation type heat-sensitive transfer recording process has a good storage stability, that is to say, superior resistance to light exposure and dark fade out, so that fade out and discoloration resulting from sunlight or fluorescent light exposure, discoloration and blurring (resulting from long storage under high temperature and high humidity) do not occur.

### BRIEF DESCRIPTION OF DRAWINGS

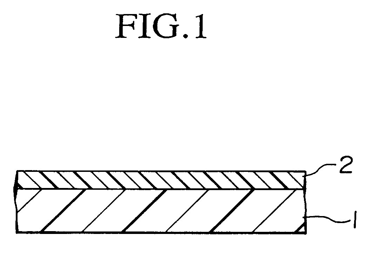

Figure 1 is a schematic cross-sectional view of one example of a recording medium according to the present invention.

DETAILED DESCRIPTION OF THE INVENTION

Hereinbelow, the present invention is described in detail using a figure. Figure 1 is a schematic cross-sectional view of a recording medium of the present invention, reference numeral 1 indicates a substrate and reference numeral 2 indicates a dye receptive layer.

Examples of the substrate constituting the recording medium according to the present invention include films or papers, for example, various plastic films, such as polyester film, polyethylene film, polypropylene film, polystyrene film, nylon film, vinyl chloride film, and the like or white films in which white pigment or filler has been added to one of these films; examples of papers include papers having cellulose fibers as the main component thereof such as recording paper, art paper, coated paper, and the like, and papers having plastic fibers as the main component thereof such as acrylic paper, polypropylene paper, polyester paper, and the like. These papers or films may be used without being subjected to preprocessing, or where necessary, preprocessing such as washing, etching, corona discharge, activating energy irradiation, dyeing, printing, or the like, may be carried out prior to use. Furthermore, a laminated substrate, in which two or more of the above substrates are laminated together, may also be used. In particular, taking into account the recording medium properties, which include, for example, the quality of the image recorded with respect to the characteristics such as roughness to the touch and occurrence of curling, a laminated substrate consisting of a synthetic paper or a plastic film laminated on a regular paper is preferred.

The dye-receptive layer 2 contains a dyeable component. In the present invention, polyester resin which is described below is used as the dyeable component. The polyester resin is formed by using diol component containing a diol compound shown in Formula (1) in a range of 5-80 molar % with respect to the total diol component.

Examples of the diol compound shown in the Formula (1) include 1,4-cyclohexane dimethanol, 1,4-cyclohexane diethanol, 1,4-cyclohexane diisopropanol, 1,4-cyclohexane dipropanol, 1,4-cyclohexane dihexanol, 1,4-cyclohexane didodecanol, and the like. However, a compound having a number of carbon atoms of $R_1$ or $R_2$ of three or less is preferable, and 1,4-cyclohexane dimethanol is more preferable. It is possible to use these diol compounds singly or in a mixture of two or more.

The diol compound shown in the Formula (1) should be 5-80 molar %, more preferably 40-80 molar % with respect to total diol component. If the amounts of the diol compound shown in the Formula (1) is less than 5 molar % with respect to the total diol component, the effect of an increase in the resistance to light and dark fade out would be insufficient. When the amounts used is more than 80 molar % with respect to the total diol component, it is difficult to prepare the polyester resin, and further, there is a tendency for the prepared polyester resin to be difficult to dissolve in organic solvent.

Examples of diol compounds other than the diol compound shown in the Formula (1) include an aliphatic diol such as ethylene glycol, propylene glycol, 1,2-propylene glycol, neopentyl glycol, 1,3-butanediol, 1,4-butanediol, 1,5-pentanediol, 1,6-hexanediol, diethylene glycol, triethylene glycol, polyethylene glycol, polypropylene glycol, polytetramethylene glycol, and the like. However, when a diol having four carbon atoms or more in the main chain, such as 1,4-butanediol, 1,5-pentanediol, 1,6-hexanediol, diethylene glycol, triethylene glycol, polyethylene glycol, polypropylene glycol, polytetramethylene glycol, or the like is used, there is a tendency for the glass transition temterature (Tg) of the polyester resin obtained to be lowered and the viscosity of the resin to increase. Accordingly, a recording medium having a dye-receptive layer containing a polyester resin formed by using such a diol compound having four carbon atoms or more in the main chain is not preferable, because it is fused and stuck to a dye layer of a transfer sheet during recording, and the image recorded fades out and blurs after long storage. Preferably, the diol to be used is the diol compound shown in Formula (2) (below) which has three carbon atoms or less in the main chain, for example, ethylene glycol, propylene glycol, 1,2-propylene glycol, neopentyl glycol, 1,3-butanediol, and the like. It is possible to use these diol compounds singly or in a mixture of two or more. It is preferable to contain it in a range of 95-20 molar % with respect to the total diol component.

$HO\text{-}R_3\text{-}OH$ (2)

(In Formula (2), $R_3$ represents an straight-chain or branched alkylene group having three carbon atoms or less in the main chain.)

On the other hand, the dicarboxylic component used for preparation of the above polyester resin is a mixture of terephthalic acid and isophthalic acid.

In order to obtain the polyester resin for a dye receptive layer for a recording medium according to the present invention, the above-mentioned materials are subjected to an esterification reaction or an ester interchange reaction by means of heating them in a reacting vessel equipped with a reflux condenser. At

this time, a general catalyst of an esterification or an ester interchange reaction, such as sulfuric acid, titanium butoxide, dibutyltin oxide, magnesium acetate, manganese acetate, or the like, can be added depending on the necessity.

Next, water or alcohol produced by the reaction is removed by a conventional method. However, the polymerization reaction in the present invention is continued by removing the diol components under evacuated condition of 1.3 x $10^3$ Pa (10 mmHg) or less. Additionally, during the polymerization, a conventional polymerization catalyst (such as titanium butoxide, dibutyltin oxide, tin acetate, zinc acetate, tin disulphate, antimony trioxide, germanium dioxide, or the like) can be used. The polymerization temperature and the amounts of catalyst are not particularly restricted.

Thus obtained polyester resin used in the recording medium of the present invention has an intrinsic viscosity of preferably 0.3-0.8 (dl/g) and more preferably 0.4-0.6 (dl/g), which is measured at 25 °C in phenol/1,1,2,2-tetrachloroethane mixture solvent (weight ratio = 1/1). If the intrinsic viscosity is less than 0.3 (dl/g), a repelling would occur at coating process of the dye-receptive layer on the substrate resulting in deterioration of external appearance. When the intrinsic viscosity is more than 0.8 (dl/g), the coating process becomes difficult and uneven coating tends to occur. Additionally, polyester resin for a dye-receptive layer in the present invention has a color reproducibility characterized by "b value" which is preferably 20 or less, more preferably 15 or less. The "b value" is defined by a measurement using an apparatus for measurement of difference in color (manufactured by Nippon Denshoku Co.,Ltd.). If the "b value" is more than 20, image receiving paper prepared by using this resin would have color, there is a tendency that color reproducibility becomes wrong. Furthermore, taking into consideration the solubility of the polyester resin for a dye-receptive layer in the present invention in a solvent and the external appearance of dye-receptive layer formed by coating thereof, the polyester resin has an acid value preferably of 3.0 or less (mg KOH/g), and more preferably less than 2.0 or less (mg KOH/g). The acid value is defined in the following manner. At first, 200 g of the resin is dissolved in 10 ml of benzyl alcohol at 180 °C in an Erlenmeyer flask, and after cooling, 10 ml of benzyl alcohol and 20 ml of chloroform are added. Next, the solution is titrated by 1/50 mol $dm^{-3}$ aqueous solution of sodium hydroxide using Cresol Red as an indicator. If the acid value is more than 3.0, there is a tendency for a white precipitate (insoluble in solvent) to be observed, and the external appearance of dye receptive layer obtained becomes wrong.

It is possible to use the specified polyester resin singly or in a mixture of two or more, in a range defined above.Additionally, it is permissible to use the specified polyester resin in a mixture with the other polyester resin, which is a polyester resin formed without a diol compound shown in Formula (1) or formed using a diol compound shown in Formula (1) in a range of less than 5 molar %. In that case, the content of the above-defined specified polyester resin should be 50 % by weight or more. If the content is less than 50 % by weight, objective effect of the present invention would not be obtained.

According to the present invention, a cross-linking component having an acryloyloxy group or a methacryloyloxy group which can be cured by activating energy rays is included in the dye receptive layer. Thereby it is possible, as disclosed in Japanese Laid-Open Patent Application No. Sho 62-46689 and Japanese Laid-Open Patent Application No. Sho 63-67188, to apply a cross-linking agent curable by means of activating energy rays, for example, a resin composition including monomers or oligomers possessing acryloyloxy groups or methacryloyloxy groups, to the surface of a substrate, and then to cure this by means of activating energy rays, thus yielding a dye-receptive layer. In particular, in the case of a method in which above-defined components (which can be cross-linked by means of activating energy rays) are blended, cured by means of activating energy rays, and a dye-receptive layer thus obtained, high productivity becomes possible, the surface gloss of the resulting dye-receptive layer is high, so that such a method is more preferable.

As the cross-linking agent which can be cured by activating energy rays, monomers or oligomers having acryloyloxy groups or methacryloyloxy groups as polymerizable groups are used.

Examples of the monomer or the oligomer include polyether acrylate or polyether methacrylate (hereinbelow, acrylate and methacrylate are termed as (meth)acrylate), polyester (meth)acrylate, polyol (meth)acrylate, epoxy (meth)acrylate, amidourethane (meth)acrylate, urethane (meth)acrylate, spiroacetal (meth)acrylate, polybutadiene (meth)acrylate, and the like.

More concretely, polyether (meth)acrylate prepared from 1,2,6-hexanetriol/propylene oxide/acrylic acid and trimethylolpropane/propylene oxide/acrylic acid; polyester (meth)acrylate prepared from adipic acid/1,6-hexanediol/acrylic acid and succinic acid/trimethylolethane/acrylic acid; (meth)acrylates or polyol (meth)-acrylates such as triethylene glycol diacrylate, hexapropylene glycol diacrylate, neopentyl glycol diacrylate, 1,4-butanediol dimethacrylate, 2-ethylhexyl acrylate, tetrahydrofurfuryl acrylate, 2-hydroxyethyl methacrylate, ethylcarbitol acrylate, trimethylolpropane triacrylate, pentaerythritol tetraacrylate, dipentaerythritol tetraacrylate, dipentaerythritol pentaacrylate, dipentaerythritol hexaacrylate, tripentaerythritol pentaacrylate, tripentaerythritol hexaacrylate, tripentaerythritol heptaacrylate, 2,2-bis(4-acryloyloxy diethoxyphenyl) propane, 2,2-bis(4-acryloyloxy triethoxyphenyl) propane, 2,2-bis(4-acryloyloxy propoxyphenyl) propane, and the like; epoxy (meth)acrylate such as diglycidyletherified bisphenol A/acrylic acid, diglycidyletherified polybisphenol A/acrylic acid, triglycidyletherified glycerin/acrylic acid, and the like; amidourethane (meth)acrylate such as γ-butyrolactone/N-methylethanolamine/bis(4-isocyanatocyclohexyl)-methane/2-hydroxyethyl acrylate, γ-butyrolactone/N-methylethanolamine/2,6-tolylene diisocyanate/tetraethylene glycol/2-hydroxyethyl acrylate, and the like; urethane acrylate such as 2,6-tolylene diisocyanate diacrylate, isophorone diisocyanate diacrylate, hexamethylenediisocyanate diacrylate and the like; spiroacetal acrylate prepared from diallylidene pentaerythritol/2-hydroxyethyl acrylate; acrylated polybutadiene prepared from epoxidized butadiene/2-hydroxyethyl acrylate; and the like. These monomers and oligomers are used singly or in a mixture of two or more.

Among the above monomeres and oligomers, compounds shown in the following Formula (3), for example, dipentaerythritol tetraacrylate, dipentaerythritol pentaacrylate, dipentaerythritol hexaacrylate, tripentaerythritol pentaaclrylate, tripentaerythritol hexaacrylate, tripentaerythritol heptaaclyrate, and the like;

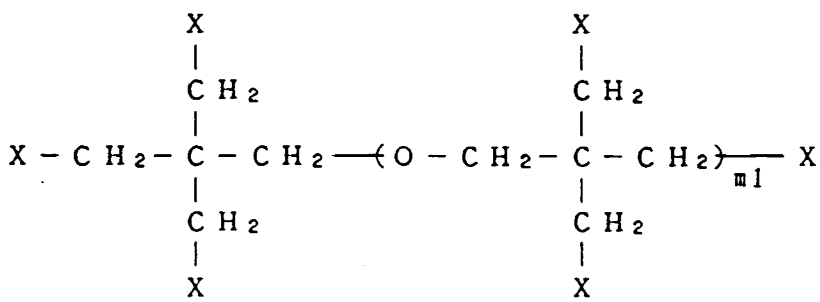

(3)

[(In the Formula (3), m1 is an integer of 1-4, and at least three of X's is a group shown in Formula (3a) respectively and the residue of the X's is an alkyl group having a number of carbon atoms within a range of 1-8, a hydroxyl group, an amino group, or a group shown in Formula (3b), (3c) or (3d).)

$CH_2 = CH - COO - R_4$ (3a)

(In the Formula (3a), $R_4$ is a single bond, an alkylene group having a number of carbon atoms within a range of 1-8, or a polyoxyalkylene group having alkylene group which has a number of carbon atoms within a range of 1-8.)

$$-(OR_5)_{m2}-H \qquad (3b)$$

(In the Formula (3b), $R_5$ is an alkylene group having a number of carbon atoms within a range of 1-8, m2 is a positive integral number.)

$$-(OR_5)_{m2}-OH \qquad (3c)$$

(In the Formula (3c), $R_5$ and m2 are identical to those of Formula (3b).)

$$-(OCOR_5)_{m2}-H \qquad (3d)$$

(In the Formula (3d), $R_5$ and m2 are identical to those of Formula (3b).)]
or polybisphenol-A type polyacrylate shown in Formula (4), for example, diacrylate of diglycidyletherified bisphenol A, diacrylate of Epikote® #1001 (m3 = 3) (produced by Yuka-Shell Epoxy Co.,Ltd.);

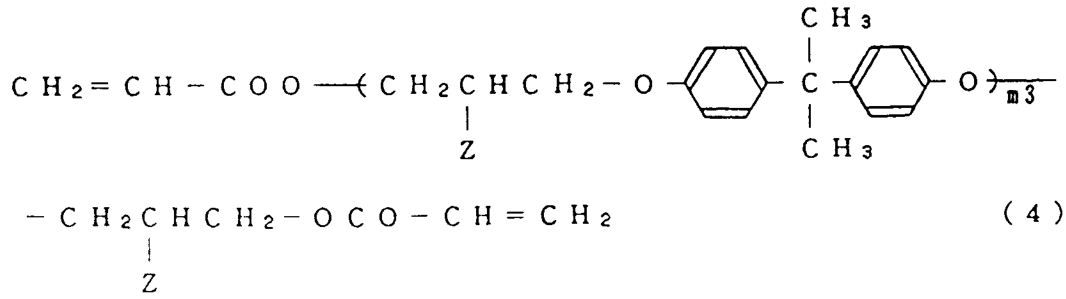

(4)

(In the Formula (4), m3 is an integer of 1-10, Z is independently -OH or -OCOCH = CH2.) or a compound shown in Formula (5), for example, 2,2-bis(4-acryloyloxydiethoxyphenyl) propane, 2,2-bis(4-acryloyloxytriethoxyphenyl) propane, 2,2-bis(4-acryloyloxypropoxyphenyl) propane, and the like; is particularly preferable cross-linking agent which is dryed quickly in the air in the case of using UV-ray as an activating energy ray.

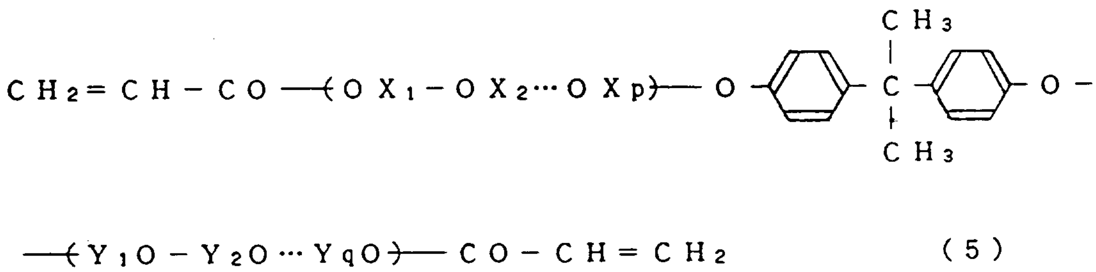

(5)

(In the Formula (5), $X_1$,$X_2$,...,Xp and $Y_1$,$Y_2$,...,Yq are the same or different alkylene groups having a number of carbon atoms of six or less, or groups one hydrogen atom thereof is substituted, and p and q is an integer of 0-5.)

The amounts of the above polyester resin and cross-linking components which are used are not particularly restricted; however, it is preferable that, with respect to a total amounts of both the polyester resin and the cross-linking components of 100 parts by weight, the polyester resin be present in an amount of 40-95 parts by weight, while the cross-linking components be present in an amount of 60-5 parts by weight.

If the amounts of the polyester resin is less than 40 % by weight, it would be difficult to increase dye density of sublimation type dye. When the amount of the polyester resin is more than 95 % by weight, the amount of cross-linking agent decreases so that there is a tendency for the resistance to blocking of the color sheet coated by sublimation dye to decrease, and sticking between the dye-receptive layer and color sheet occurs easily at the time of heat transfer.

The resin composition containing a cross-linking agent curable by means of activating energy rays may be cured by activating energy rays such as an electron beam or ultraviolet radiation; however, in the case in which ultraviolet radiation is used as the activating energy rays, it is desirable to include a conventional photopolymerization initiator. The amounts of photopolymerization initiator which is used is not particularly restricted; however, it is preferable that, with respect to a total amounts of the above-described polyester resin forming the dye receptive layer and cross-linking components of 100 parts by weight, the photopolymerization initiator be present in an amount of 0.1-10 parts by weight.

Furthermore, it is permissible to include a releasing agent in the dye receptive layer of the recording medium according to the present invention in order to further increase the separability of the dye receptive layer from the transfer sheet. Examples of this releasing agent include silicone surfactants, fluorine surfactants, a graft polymer using polyorganosiloxane as a trunk or a branch, silicon or fluorine compounds producing a cross-linked structure, for example, a combination of amino-denatured silicon and epoxy-denatured silicon, and the like; the releasing agents may be used singly or concurrently. The amount of the releasing agent used is not particularly restricted; however, with respect to a total of 100 parts by weight of polyester resin and cross-linking components, it is preferable that the releasing agent be present in an amount of 0.01-30 parts by weight.

In the present invention, in order to further increase the light resistance of the dye receptive layer, it is permissible to include an ultraviolet absorber in the resin composition constituting the dye receptive layer. It

is possible to use conventional ultraviolet absorbers such as benzotriazole ultraviolet absorbers or benzophenone ultraviolet absorbers, or the like, as these ultraviolet absorbers. Concrete examples of benzotriazole ultraviolet absorbers include, for example, 2-(5-methyl-2-hydroxy phenyl) benzotriazole (manufactured by Ciba-Geigy: TINUVIN® P), 2-[2-hydroxy-3,5-bis(α,α-dimethyl-benzyl) phenyl]-2H-benzotriazole (manufactured by Ciba-Geigy: TINUVIN® 234), 2-(5-t-butyl-2-hydroxy phenyl) benzotriazole (manufactured by Ciba-Geigy: TINUVIN® PS), 2-(3,5-di-t-butyl-2-hydroxy phenyl) benzotriazole (manufactured by Ciba-Geigy: TINUVIN® 320), 2-(3-t-butyl-5-methyl-2-hydroxy phenyl)-5-chlorobenzotriazole (manufactured by Ciba-Geigy: TINUVIN® 326), 2-(3,5-di-t-butyl-2-hydroxyphenyl)-5-chlorobenzotriazole (manufactured by Ciba-Geigy: TINUVIN® 327), 2-(3,5-di-t-amyl-2-hydroxy phenyl) benzotriazole (manufactured by Ciba-Geigy: TINUVIN® 328), 2-[2-hydroxy-3-(3,4,5,6-tetrahydrophthalimide methyl)-5-methyl phenyl] benzotriazole (manufactured by Sumitomo Chemical Company, Limited: SUMISORB® 250), 2-(4-octoxy-2-hydroxyphenyl) benzotriazole, and the like. Concrete examples of the benzophenone ultraviolet absorber include, for example, 2,4-dihydroxybenzophenone, 2-hydroxy-4-methoxy benzophenone, 2-hydroxy-4-octoxybenzophenone, 2-hydroxy-4-dodecyloxybenzophenone, 2-hydroxy-4-benzyloxybenzophenone, 2,2'-dihydroxy-4-methoxy benzophenone, 2,2',4,4'-tetrahydroxy benzophenone, 2,2'-dihydroxy-4,4'-dimethoxybenzophenone, 2,2'-dihydroxy-4,4'-dioctoxy benzophenone, 2,2'-dihydroxy-4,4'-didodecyloxy benzophenone, 2-hydroxy-4-methoxy-5-sulfobenzophenone, and the like.

These ultraviolet absorbers may be used singly or in a mixture of two or more thereof. The amounts used thereof are not particularly restricted; however, with respect to a total of 100 parts by weight of polyester resin and cross-linking components, the ultraviolet absorber may be preferably present in an amount of 1-10 parts by weight. If the amount used is too small, the effect of an increase in light resistance is insufficient, while when the amount used is too great, the ultraviolet absorber bleeds onto the surface of the dye receptive layer, and the recorded image tends to blur over time.

Furthermore, in order to further increase the light resistance of the dye receptive layer, it is acceptable to include a hindered amine photostabilizer. Conventional hindered amine photostabilizers may be used; concrete examples thereof include, for example, bis(2,2,6,6-tetramethyl-4-piperidyl) sebacate (manufactured by Sankyo Company, Limited: SANOL® LS770), bis(1,2,2,6,6-pentamethyl-4-piperidyl) sebacate (manufactured by Sankyo Company, Limited: SANOL® LS765), 1-{2-[3-(3,5-di-t-butyl-4-hydroxy phenyl) propionyloxy] ethyl}-4-[3-(3,5-di-t-butyl-4-hydroxy phenyl) propionyloxy]-2,2,6,6-tetramethyl piperidine (manufactured by Sankyo Company, Limited: SANOL® LS2626), 4-benzoyloxy-2,2,6,6-tetramethyl piperidine (manufactured by Sankyo Company, Limited: SANOL® LS744), 8-acetyl-3-dodecyl-7,7,9,9-tetramethyl-1,3,8-triaza-spiro [4,5] decane-2,4-dione (manufactured by Sankyo Company, Limited: SANOL® LS440), 2-(3,5-di-t-butyl-4-hydroxy benzyl)-2-n-butylmalonate bis (1,2,2,6,6-pentamethyl-4-piperidyl) (manufactured by Ciba-Geigy: TINUVIN® 144), succinate bis(2,2,6,6-tetramethyl-4-piperidinyl) ester (manufactured by Ciba-Geigy: TINUVIN® 780 FF), a condensation polymer of dimethyl succinate and 1-(2-hydroxy ethyl)-4-hydroxy-2,2,6,6-tetramethyl piperidine (manufactured by Ciba-Geigy: TINUVIN® 622 LD), poly{[6-(1,1,3,3-tetramethylbutyl) amino-1,3,5-triazine-2,4-dyl][(2,2,6,6-tetramethyl-4-piperidyl) imino] hexamethylene [-(2,2,6,6-tetramethyl-4-piperidyl) imino]} (manufactured by Ciba-Geigy: CHIMASSORB® 944LD), a condensation polymer of N,N'-bis(3-aminopropyl) ethylene diamine and 2,4-bis[N-butyl-N-(1,2,2,6,6-pentamethyl-4-piperidyl) amino]-6-chloro-1,3,5-triazine (manufactured by Ciba-Geigy: CHIMASSORB® 119FL), HA-70G (manufactured by Sankyo Company, Limited), ADK STAB® LA-52, ADK STAB® LA-57, ADK STAB® LA-62, ADK STAB® LA-67, ADK STAB® LA-63, ADK STAB® LA-68, ADK STAB® LA-82, ADK STAB® LA-87 (all produced by Asahi Denka Kogyo K.K.), and the like.

These hindered amine photostabilizers may be used singly or in a mixture of two or more; however, when the effect of an increase in light resistance is taken into account, it is preferable that they be used in concert with the above-described ultraviolet absorbers. The amount used of these hindered amine photostabilizers is not particularly restricted; however, with respect to a total of 100 parts by weight of polyester resin and cross-linking components, it is preferable that the hindered amine photostabilizer be present in an amount of 0.1-10 parts by weight. If the amount used is too small, the effect of an increase in light resistance may not be sufficiently attained, while on the other hand, when the amount used is too large, the hindered amine photostabilizer tends to bleed out on to the surface of the dye receptive layer, and thus the recorded image tends to blur over time.

Furthermore, in order to further increase the light resistance of the dye-receptive layer, it is acceptable to include an antioxidant. As the antioxidant, conventional phenol antioxidant, amine antioxidant, sulfur antioxidant or phosphate antioxidant may be used. These antioxidants may be used singly or in a mixture of two or more. The amount used of these antioxidants is not particularly restricted; however, with respect to a total of 100 parts by weight of polyester resin and cross-linking components, it is preferable that the antioxidant be present in an amount of 0.1-20 parts by weight. If the amount used is too small, the effect of

an increase in light resistance will not be sufficiently attained, while on the other hand, when the amount used is too large, the antioxidant tends to bleed out on to the surface of the dye receptive layer, and thus the recorded image tends to blur over time.

Furthermore, it is permissible to contain thermoplastic resin other than the polyester resin in the dye receptive layer of the recording medium of the present invention, depending on the purpose. Examples of the thermoplastic resin include a cellulose resin such as methyl cellulose, ethyl cellulose, ethyl hydroxy cellulose, hydroxy ethyl cellulose, hydroxy propyl cellulose, cellulose acetate, and the like, or a vinyl resin such as polyvinyl alcohol, polyvinyl butyral, polyvinyl acetal, polyvinyl acetate, polyvinyl chloride, polyvinyl pyrrolidone, styrene, and the like, an acrylate resin such as polymethyl (meth)acrylate, polybutyl (meth)-acrylate, polyacrylamide, polyacrylonitrile, and the like, a polycarbonate resin, a polyurethane resin, a polyamide resin, a urea resin, polycaprolactone resin, a polyallylate resin, polysulfone resin and a copolymer or a mixture thereof.

When the object of the present invention is taken into account, it is preferable that the amount of the thermoplastic resin (other than the polyester resin) to be used does not exceed the amount of the above-specified polyester resin.

Furthermore, depending on the purpose of use, inorganic fillers such as silica, calcium carbonate, titanium oxide, zinc oxide, and the like, may be included in the dye receptive layer.

In manufacturing the recording medium of the present invention, the resin composition may be applied directly to a substrate surface by means of a coating method such as roll coating, bar coating, blade coating, or the like, and the dye receptive layer can thus be formed. However, in order to increase the efficiency of the application process, the resin composition may be blended with a solvent able to dissolve the resin composition, such as, for example, ethyl alcohol, methyl ethyl ketone, toluene, ethyl acetate, dimethylformamide, tetrahydrofuran, and the like, and appropriate adjustment of the application viscosity may be carried out. By means of this, application may easily be conducted by means of spray coating, curtain coating, flow coating, dip coating, or the like. In the case in which such solvents are blended with the resin composition, the solvents must be volatilized and dried after the coating of the resin composition.

The dye receptive layers preferably have a thickness of 0.5-100 µm, more preferably within a range of 1-50 µm. At a thickness of less than 0.5 µm, high recording density will not be obtained.

Furthermore, the recording medium according to the present invention may have a layer such as an adhesion-facilitating layer, an electrostatic-prevention layer, a whiteness-improving layer, or a compound layer combining these functions provided between the image-receiving layer and the substrate. In addition, in this recording medium according to the present invention, processing such as electrostatic-prevention processing, contaminant-protection processing, smoothing processing, and writing-facilitation processing may be carried out on the side opposite the dye receptive layer.

## Examples

Hereinbelow, the present invention will be explained in detail based on examples.

## Example

### MANUFACTURATION OF SUBSTRATE

On one side of a sheet of art paper (thickness 85 µm), a white polyester film (manufactured by Diafoil Hoechst: W900, thickness 38 µm was laminated, and on the other side of this paper, a sheet of white polypropylene paper (manufactured by Toyobo: TOYOPEARL® SS, thickness 50 µm was laminated. The AD-577-1® and the CAT-52® adhesives produced by Toyo Morton Co., Ltd. were used as the adhesives therefor. The amount of the adhesives was 5 g/m$^2$ in dry between the white polyester film and coat paper, and 3 g/m$^2$ in dry between the coat paper and white polypropylene paper. After drying at 80 °C for about 30, the substrate was aged at 40 °C for two days.

PREPARATION OF POLYESTER RESIN

| Dicarboxyric components | |
|---|---|
| Terephthalic acid<br>Isophthalic acid | 40 molar parts<br>60 molar parts |

| Diol components | |
|---|---|
| Ethylene glycol<br>Neopentyl glycol<br>1,4-cyclohexanedimethanol | 18 molar parts<br>42 molar parts<br>60 molar parts |

The above materials were poured into a reacting vessel equipped wuth a reflux condenser, and the inside of the vessel was heated to 130 °C. After that, the temperature was raised gradually to 260 °C, so that the diol components and the dicarboxylic components reacted. Next, zinc acetate in an amount of 300 ppm with respect to the dicarboxylic components, antimony trioxide in an amount of 400 ppm with respect to the dicarboxylic components were added, and polymerization reaction was continued with removing excessive diol, resulting in preparation of the polyester resin.

Thus-obtained polyester resin has a molar ratio of terephthalic acid component/isophthalic acid component is 40/60, and ethylene glycol component/neopentyl glycol component/1,4-cyclohexanedimethanol is 14/32/54. This polyester resin is termed polyester resin G, and the other resins (polyester resin A-J) having compositions listed in table 3 were prepared. Additionally, intrinsic viscosity in the table 3 is measured by the method described in this specification.

FORMING OF DYE RECEPTIVE LAYER

The coating fluid for the dye receptive layer within the resin composition shown in the table 1 and 2 was coated uniformly on the surface of the substrate above, by means of an immersion method, and, after the volatilization of the solvent, this was irradiated with ultraviolet rays by means of a high pressure mercury lamp, and an dye-receptive layer having a thickness of 5-6 μm was formed, so that a recording medium was obtained (Examples 1-9, Comparative Examples 2-4). In Comparative Example 1, this was heated at 100 °C for two hours, and a dye-receptive layer having a thickness of 5-6 μm was formed, so that a recording medium was obtained.

In the table 1 and 2,

*1) Polyester resin having a composition listed in table 3.
*2) 2P6A: dipentaerythritol hexaacrylate.
*3) 2P5A: dipentaerythritol pentaacrylate.
*4) 2P4A: dipentaerythritol tetraacrylate.
*5) A-DEP: 2,2-bis(4-acryloyloxydiethoxyphenyl) propane.
*6) KF-393: amino-denaturated silicone oil (Shin-Etsu Chemical Co.,Ltd.)
*7) X-22-343: epoxy-denaturated silicone oil (Shin-Etsu Chemical Co.,Ltd.)
*8) Silicone surfactant A; shown in the following Formula.

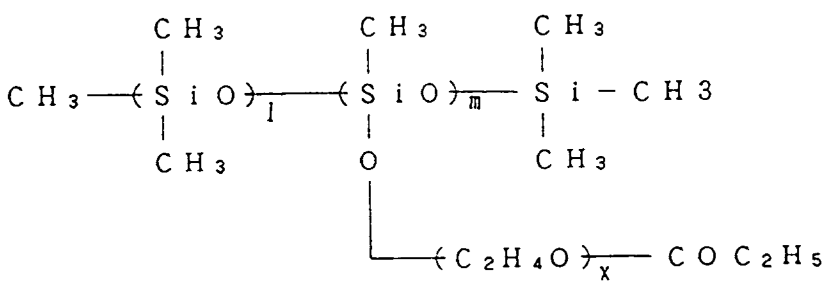

(In the Formula, l,m and x is an integer, and (2l + m + l)/mx = 1.3)
*9) Antioxidant A; shown in the following Formula.

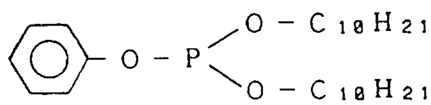

(each recording medium obtained in Example 1-9 or Comparative Example 1-4 was tested for resistance to light-exposure and resistance to dark fade-out. The results are shown in Tables 1 and 2. The methods of testing the above properties are described below.)

*10) Resistance to light exposure:

Recording was conducted using the cyan color and the magenta color of the color sheet VW-VS 100 for the NV-MP1 video printer produced by Matsushita Electric Industrial Co., Ltd. and the cyan color of the color sheet CK-10S for the CP-10 video printer produced by Mitsubishi Electric Industrial Co.,Ltd., and using a thermal head produced by Kyocera Corporation (950 Ohms, 6 dots / mm) and under conditions such that the recording voltage was 13V, and the pulse width was 10 ms. Subsequently, the recorded image was exposed for a period of 72 hours using a xenon long-life fade meter (produced by Suga Test Instruments Co., Ltd.: model FAL-25AX®) and the color variation (ΔE) before and after exposure was measured.

*11) Resistance to dark fade-out:

Recording was conducted by means of thermal head (950 ohms, 6 dots/mm) produced by Kyocera Corporation and using the cyan color of a VW-VS 100 color sheet for use in a NV-MP 1 video printer produced by Matsushita Electric Industrial Co.,Ltd., under conditions such that the recording voltage was 15 V, and the pulse width was 10 ms. Subsequently, the recorded image was stored in a darkened area for a period of 7 days at a temperature of 60 °C and at a humidity of 60 %; the reflection density of the image before and after storage was measured using a Macbeth densitometer (status A filter). This dark fade-out is estimated by the following expression.

$$\text{dark fade-out (\%)} = \frac{\text{(post-storage reflection density)}}{\text{(pre-storage reflection density)}} \times 100$$

*12) After recording an image, the dye-receptive layer stuck slightly to a transfer sheet, so that a part of the dye layer of the transfer sheet was flayed and moved to the dye receptive layer.

As is clear from tables 1 and 2, the recording medium of Examples 1-9, has superior resistance to light exposure and dark fade out. Especially, the recording medium of Examples 5-8, in which the diol compound is contained in a range of 40 molar % or more with respect to a total diol component, has further superior resistance to light exposure and dark fade out. Additionally, the recording medium of Examples 1-8 in which the polyester resin is constituted of diol compound shown in Formula (1) and diol compound shown in Formula (2), has good releasability to transfer sheet and resistance to dark fade out, comparing to the recording medium of Example 9, in which the diol component contains a diol compound having four carbon atoms or more in the main chain.

TABLE 1-(1)

| | | | Example 1 | Example 2 | Example 3 | Example 4 | Example 5 |
|---|---|---|---|---|---|---|---|
| composition of coating fluid for a dye receptive layer | polyester resin *1) | resin A | | | 20 | | |
| | | resin B | | | | | |
| | | resin C | 70 | | | | |
| | | resin D | | 70 | 50 | | |
| | | resin E | | | | 70 | |
| | | resin F | | | | | 70 |
| | | resin G | | | | | |
| | | resin H | | | | | |
| | | resin I | | | | | |
| | | resin J | | | | | |
| | cross-linking agent | 2P6A *2) | 4.5 | 4.5 | 4.5 | 4.5 | 4.5 |
| | | 2P5A *3) | 6 | 6 | 6 | 6 | 6 |
| | | 2P4A *4) | 4.5 | 4.5 | 4.5 | 4.5 | 4.5 |
| | | A-DEP *5) | 15 | 15 | 15 | 15 | 15 |
| | | KF-393 *6) | | | | | |
| | | X-22-343 *7) | | | | | |
| | photopolymerization initiator a) | | 4 | 4 | 4 | 4 | 4 |
| | silicone surfactant *8) | | 0.5 | 0.5 | 0.5 | 0.5 | 0.5 |
| | UV absorber b) | | 5 | 5 | 5 | 5 | 5 |
| | photostabilizer c) | | 5 | 5 | 5 | 5 | 5 |
| | antioxidant A *9) | | | | | | |
| | solvent | methyl ethyl ketone | 500 | 500 | 500 | 500 | 500 |
| | | toluene | 100 | 100 | 100 | 100 | 100 |
| resistance to light exposure *10) | | CK-10S | 22 | 20 | 24 | 19 | 16 |
| | | VW-VS100 | 23 | 22 | 23 | 20 | 17 |
| resistance to dark fade out (%) *11) | | | 90 | 91 | 90 | 92 | 93 |

a) 1-hydroxycyclohexylphenylketone

b) 2-hydroxy-4-n-octoxybenzophenone

c) bis-(1,2,2,6,6-pentamethyl-4-pyperidyl) sebacate

TABLE 1-(2)

| | | | Example 6 | Example 7 | Example 8 | Example 9 | Comparative Example 1 |
|---|---|---|---|---|---|---|---|
| composition of coating fluid for a dye receptive layer | polyester resin *1) | resin A | | | 20 | | |
| | | resin B | | | | | |
| | | resin C | | | | | |
| | | resin D | | | | | 86 |
| | | resin E | | | | | |
| | | resin F | | | | | |
| | | resin G | 70 | | | - | |
| | | resin H | | 70 | | | |
| | | resin I | | | 70 | | |
| | | resin J | | | | 70 | |
| | cross-linking agent | 2P6A *2) | 4.5 | 4.5 | 4.5 | 4.5 | |
| | | 2P5A *3) | 6 | 6 | 6 | 6 | |
| | | 2P4A *4) | 4.5 | 4.5 | 4.5 | 4.5 | |
| | | A-DEP *5) | 15 | 15 | 15 | 15 | |
| | | KF-393 *6) | | | | | 7 |
| | | X-22-343 *7) | | | | | 7 |
| | photopolymerization initiator a) | | 4 | 4 | 4 | 4 | |
| | silicone surfactant *8) | | 0.5 | 0.5 | 0.5 | 0.5 | |
| | UV absorber b) | | 5 | 5 | 5 | 5 | |
| | photostabilizer c) | | 5 | 5 | 5 | 5 | |
| | antioxidant A *9) | | | | | | 10 |
| | solvent | methyl ethyl ketone | 100 | 100 | 500 | 500 | 300 |
| | | toluene | 500 | 500 | 100 | 100 | 300 |
| resistance to light exposure *10) | | CK-10S | 15 | 14 | 17 | 25 | 17 |
| | | VW-VS100 | 14 | 13 | 17 | 26 *12) | 13 |
| resistance to dark fade out (%) *11) | | | 94 | 95 | 93 | 85 *12) | 87 |

a) 1-hydroxycyclohexylphenylketone

b) 2-hydroxy-4-n-octoxybenzophenone

c) bis-(1,2,2,6,6-pentamethyl-4-pyperidyl) sebacate

TABLE 2

| | | | Comparative Example 2 | Comparativa Example 3 | Comparative Example 4 |
|---|---|---|---|---|---|
| composition of coating fluid for a dye receptive layer | polyester resin *1) | resin A | 70 | | 50 |
| | | resin B | | 70 | |
| | | resin C | | | |
| | | resin D | | | 20 |
| | | resin E | | | |
| | | resin F | | | |
| | | resin G | | | |
| | | resin H | | | |
| | | resin I | | | |
| | | resin J | | | |
| | cross-linking agent | 2P6A *2) | 4.5 | 4.5 | 4.5 |
| | | 2P5A *3) | 6 | 6 | 6 |
| | | 2P4A *4) | 4.5 | 4.5 | 4.5 |
| | | A-DEP *5) | 15 | 15 | 15 |
| | | KF-393 *6) | | | |
| | | X-22-343 *7) | | | |
| | photopolymerization initiator a) | | 4 | 4 | 4 |
| | silicone surfactant *8) | | 0.5 | 0.5 | 0.5 |
| | UV absorber b) | | 5 | 5 | 5 |
| | photostabilizer c) | | 5 | 5 | 5 |
| | antioxidant A *9) | | | | |
| | solvent | methyl ethyl ketone | 500 | 500 | 500 |
| | | toluene | 100 | 100 | 100 |
| resistance to light exposure *10) | | CK-10S | 36 | 31 | 31 |
| | | VW-VS100 | 25 | 24 | 24 |
| resistance to dark fade out (%) *11) | | | 85 | 87 | 87 |

a) 1-hydroxycyclohexylphenylketone

b) 2-hydroxy-4-n-octoxybenzophenone

c) bis-(1,2,2,6,6-pentamethyl-4-pyperidyl) sebacate

TABLE 3

| | composition (molar ratio) | | | | | | | molecular weight | Tg (°C) | intrinsic viscosity [$\eta$] |
|---|---|---|---|---|---|---|---|---|---|---|
| | carboxylic acid | | glycol | | | | | | | |
| | terephthalic acid | isophthalic acid | ethylene glycol | neopentyl glycol | 1,4-cyclohexane dimethanol | 1,4-cyclohexane diethanol | 1,6-hexane diol | | | |
| A | 50 | 50 | 50 | 50 | -- | -- | -- | 15000-20000 | 67 | 0.53 |
| B | 40 | 60 | 30 | 67 | 3 | -- | -- | 30000-35000 | 59 | 0.52 |
| C | 40 | 60 | 27 | 66 | 7 | -- | -- | 25000-30000 | 60 | 0.44 |
| D | 60 | 40 | 22 | 56 | 22 | -- | -- | 30000-35000 | 64 | 0.55 |
| E | 40 | 60 | 21 | 48 | 31 | -- | -- | 25000-30000 | 65 | 0.48 |
| F | 40 | 60 | 18 | 40 | 42 | -- | -- | 25000-30000 | 67 | 0.50 |
| G | 40 | 60 | 14 | 32 | 54 | -- | -- | 25000-30000 | 70 | 0.52 |
| H | 30 | 70 | 10 | 20 | 70 | -- | -- | 20000-25000 | 71 | 0.46 |
| I | 40 | 60 | 18 | 40 | -- | 42 | -- | 25000-30000 | 63 | 0.50 |
| J | 40 | 60 | 20 | 46 | 20 | -- | 14 | 25000-30000 | 49 | 0.45 |

## Claims

1. A recording medium for sublimation type heat-sensitive transfer recording process, wherein a dye receptive layer contains a polyester resin formed by using a dicarboxylic component consisting of a mixture of terephthalic acid and isophthalic acid and a diol component containing a diol compound shown in Formula (1) in a range of 5-80 mole% with respect to the total diol component, and a cross-linking agent having an acryloyloxy group or a methacryloyloxy group which can be cured by an activating energy ray.

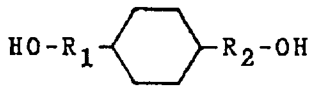

(1)

(In formula (1), each of $R_1$ and $R_2$ represents an alkylene group having a number of carbon atoms within a range of 1-12).

2. The recording medium for sublimation type heat-sensitive transfer recording process according to claim 1, wherein said diol component contains a diol compound shown in formula (1) in a range of 40-80 mole % with respect to the total diol component.

3. The recording medium for sublimation type heat-sensitive transfer recording process according to claim 1, wherein said diol compound shown in formula (1) is selected from a group consisting of 1,4-cyclohexanedimethanol, 1,4-cyclohexanediethanol, 1,4-cyclohexanediisopropanol, 1,4-cyclohexanedipropanol, 1,4-cyclohexanedihexanol, and 1,4-cyclohexanedidodecanol.

4. The recording medium for sublimation type heat-sensitive transfer recording process according to claim 1, wherein said diol compound shown in formula (1) is 1,4-cyclohexanedimethanol.

5. The recording medium for sublimation type heat-sensitive transfer recording process according to claim 1, wherein said diol component contains (a) at least one diol compound shown in formula (1) in a range of 5-80 mole % with respect to the total diol component and (b) at least one diol compound shown in formula (2) in a range of 95-20 mole % with respect to the total diol component.

$HO-R_3-OH$ (2)

(In formula (2), $R_3$ represents a straight-chain or branched alkylene group having three carbon atoms or less in the main chain.)

6. The recording medium for sublimation type heat-sensitive transfer recording process according to claim 1, wherein said polyester resin has an intrinsic viscosity of 0.3-0.8 (dl/g) which is measured at 25 ° C in phenol/1,1,2,2-tetrachloroethane (weight ratio = 1/1) mixture solvent.

7. The recording medium for sublimation type heat-sensitive transfer recording process according to claim 6, wherein said intrinsic viscosity is 0.4-0.6 (dl/g.)

**Patentansprüche**

1. Aufzeichnungsmedium für wärmeempfindliche Übertragungsaufzeichnungsverfahren vom Sublimationstyp, wobei eine Farbstoffempfangsschicht ein Polyesterharz enthält, das unter Verwendung einer Dicarboxylkomponente, die aus einem Gemisch aus Terephthalsäure und Isophthalsäure besteht, und einer Diolkomponente, die ein Diol, wie es in Formel (1) gezeigt ist, im Bereich von 5 bis 80 Mol-% in bezug auf die gesamte Diolkomponente enthält, und eines Vernetzungsmittels mit einer Acryloyloxygruppe oder einer Methacryloyloxygruppe, wobei eine Härtung durch aktivierende Energiestrahlen erfolgen kann, gebildet wird.

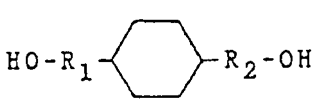

(1)

(In Formel (1) bedeutet jeder der Reste $R_1$ und $R_2$ eine Alkylengruppe mit einer Anzahl von

Kohlenstoffatomen im Bereich von 1 bis 12.)

**2.** Aufzeichnungsmedium für wärmeempfindliche Übertragungsaufzeichnungsverfahren vom Sublimationstyp nach Anspruch 1, wobei die Diolkomponente eine Diolverbindung, wie sie in Formel (1) gezeigt ist, im Bereich von 40 bis 80 Mol-%, bezogen auf die gesamte Diolkomponente, enthält.

**3.** Aufzeichnungsmedium für wärmeempfindliche Übertragungsaufzeichnungsverfahren vom Sublimationstyp nach Anspruch 1, wobei die Diolverbindung, wie sie in Formel (1) gezeigt ist, aus der aus 1,4-Cyclohexandimethanol, 1,4-Cyclohexandiethanol, 1,4-Cyclohexandiisopropanol, 1,4-Cyclohexandipropanol, 1,4-Cyclohexandihexanol und 1,4-Cyclohexandidodecanol bestehenden Gruppe ausgewählt ist.

**4.** Aufzeichnungsmedium für wärmeempfindliche Übertragungsaufzeichnungsverfahren vom Sublimationstyp nach Anspruch 1, wobei es sich bei der in Formel (1) gezeigten Diolkomponente um 1,4-Cyclohexandimethanol handelt.

**5.** Aufzeichnungsmedium für wärmeempfindliche Übertragungsaufzeichnungsverfahren vom Sublimationstyp nach Anspruch 1, wobei die Diolkomponente (a) mindestens eine Diolverbindung, wie sie in Formel (1) gezeigt ist, im Bereich von 5 bis 80 Mol-%, in bezug auf die gesamte Diolkomponente, und (b) mindestens eine Diolverbindung, wie sie in Formel (2) gezeigt ist, im Bereich von 95 bis 20 Mol-%, in bezug auf die gesamte Diolkomponente, enthält.

$HO\text{-}R_3\text{-}OH$ (2)

In Formel (2) bedeutet $R_3$ eine geradkettige oder verzweigte Alkylengruppe mit 3 Kohlenstoffatomen oder weniger in der Hauptkette.)

**6.** Aufzeichnungsmedium für wärmeempfindliche Übertragungsaufzeichnungsverfahren vom Sublimationstyp nach Anspruch 1, wobei das Polyesterharz eine Grenzviskositätszahl von 0,3 bis 0,8 (dl/g) aufweist, die bei 25 °C in einem Lösungsmittelgemisch aus Phenol/1,1,2,2-Tetrachlorethan (Gewichtsverhältnis = 1/1) gemessen wird.

**7.** Aufzeichnungsmedium für wärmeempfindliche Übertragungsaufzeichnungsverfahren vom Sublimationstyp nach Anspruch 6, wobei die Grenzviskositätszahl 0,4 bis 0,6 (dl/g) beträgt.

## Revendications

**1.** Support d'enregistrement utilisable dans un procédé d'enregistrement par transfert thermique du type à sublimation, dans lequel la couche de réception de colorant contient une résine de polyester formée à partir d'un composant dicarboxylique constitué d'un mélange d'acide téréphtalique et d'acide isophtalique, et d'un composent diol contenant un diol représenté par la formule (1), en une proportion de 5 à 80 % en moles par rapport au total du composent diol, et un agent de réticulation, comportant un groupe acryloyloxy ou méthacryloyloxy, qui peut entrainer un durcissement sous l'action d'un rayonnement d'énergie d'activation ;

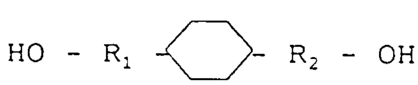 (1)

(dans la formule (1), chacun des symboles $R_1$ et $R_2$ représente un groupe alkylène comportant de 1 à 12 atomes de carbone).

**2.** Support d'enregistrement utilisable dans un procédé d'enregistrement par transfert thermique du type à sublimation, conforme à la revendication 1, dans lequel ledit composent diol contient un diol de formule (1) en une proportion de 40 à 80 % en moles par rapport au composent diol total.

**3.** Support d'enregistrement utilisable dans un procédé d'enregistrement par transfert thermique du type à sublimation, conforme à la revendication 1, dans lequel ledit diol de formule (1) est choisi dans l'ensemble constitué par le 1,4-cyclohexanediméthanol, le 1,4-cyclohexanediéthanol, le 1,4-cyclohexanediisopropanol, le 1,4-cyclohexanedipropanol, le 1,4-cyclohexanedihexanol, et le 1,4-cyclohexanedidodécanol.

**4.** Support d'enregistrement utilisable dans un procédé d'enregistrement par transfert thermique du type à sublimation, conforme à la revendication 1, dans lequel ledit diol de formule (1) est du 1,4-cyclohexanediméthanol.

**5.** Support d'enregistrement utilisable dans un procédé d'enregistrement par transfert thermique du type à sublimation, conforme à la revendication 1, dans lequel ledit composant diol contient (a) au moins un diol de formule (1), en une proportion de 5 à 80 % en moles par rapport au composant diol total, et (b) au moins un diol représenté par la formule (2), en une proportion de 95 à 20 % en moles par rapport au composant diol total ;

$HO\text{-}R_3\text{-}OH$ (2)

(dans la formule (2), $R_3$ représente un groupe alkylène à chaîne droite ou ramifiée dont la chaîne principale comporte au plus trois atomes de carbone).

**6.** Support d'enregistrement utilisable dans un procédé d'enregistrement par transfert thermique du type à sublimation, conforme à la revendication 1, dans lequel ladite résine de polyester présente une viscosité intrinsèque valant de 0,3 à 0,8 dl/g, cette viscosité étant mesurée à 25 °C dans un mélange solvant de phénol et de 1,1,2,2-tétrachloroéthane (rapport pondéral : 1/1).

**7.** Support d'enregistrement utilisable dans un procédé d'enregistrement par transfert thermique du type à sublimation, conforme à la revendication 6, dans lequel ladite viscosité intrinsèque vaut de 0,4 à 0,6 dl/g.

FIG. 1